(19) Europäisches Patentamt

European Patent Office

Office européen des brevets

(11) **EP 4 440 008 A1**

(12) **EUROPEAN PATENT APPLICATION**

(43) Date of publication:
**02.10.2024 Bulletin 2024/40**

(21) Application number: **23165737.0**

(22) Date of filing: **30.03.2023**

(51) International Patent Classification (IPC):
***H04B 10/70*** (2013.01)   ***H04J 14/04*** (2006.01)

(52) Cooperative Patent Classification (CPC):
**H04B 10/70; H04J 14/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus S.A.S.**
**31700 Blagnac (FR)**

(72) Inventor: **COMIN, Alberto**
**82024 Taufkirchen (DE)**

(74) Representative: **OTN Airbus SAS**
**Airbus Defence and Space GmbH**
**Willy-Messerschmitt-Straße 1**
**82024 Taufkirchen (DE)**

(54) **OPTICAL DETECTOR, OPTICAL RECEIVER, AND METHOD FOR QUANTUM COMMUNICATION**

(57)     The present invention provides an optical detector for quantum communication, comprising a photonic lantern (20) comprising a multi-mode input port (21) configured to receive a spatial multi-mode input signal (L1), and a plurality of single-mode output ports (22) connected to the multi-mode input port (21) by respective light channels (23), wherein the photonic lantern (20) is configured to split the spatial multi-mode input signal (L1) by guiding the spatial multi-mode input signal (L1) in the individual light channels (23) into a plurality of mutually orthogonal spatial single-mode output signals (L2) and output the plurality of single-mode output signals (L2) through the single-mode output ports (22); a coherent beam combiner (30) configured to coherently combine the plurality of single-mode output signals (L2) to form a single-mode combined output signal (L3); and a photodetector assembly (40) comprising one or more single photon counters (41) and arranged and configured to detect the combined output signal (L3) to provide a detection signal (L4). The present invention further provides an optical receiver and a corresponding method for quantum communication.

**FIG. 1**

**Description**

TECHNICAL FIELD OF THE INVENTION

The present invention relates to an optical detector, an optical receiver and a corresponding method for quantum communication.

TECHNICAL BACKGROUND

In order to establish long-distance secure communication links, it is expected that in the near future, an important application of quantum communication will be free-space quantum key distribution (QKD) over an air-ground link or a space-ground QKD link.

In these channels, atmospheric turbulences distort the wavefront of optical beams including those used for quantum communication. Since it is not possible to amplify quantum signals, a setup for free-space QKD receiver requires a large telescope for receiving the signal. However, when the diameter of the telescope becomes larger than the coherence length of the wavefront, the so-called Fried parameter, the telescope cannot efficiently focus the received light. Therefore, distortions of the wavefront of a QKD link are even more severe than for a classical communication link, leading to a spatial multi-mode signal at the receiver.

The most sensitive photon detectors, such as a superconducting nanowire single photon detector (SNSPD), however, require spatial single-mode input, preferably delivered by a single-mode fiber or another single-mode waveguide. Furthermore, such detectors require cryogenic temperatures of a few K, which makes it difficult to use phase shifters based on a thermo-electric effect for coupling the multi-mode signal into the single-mode fiber or the detector. Furthermore, typically such a cryogenic detector is not placed in the same chamber or box together with detector optics, since the design of photonic circuitry compatible with temperatures of a few K is too complicated.

There is a need for a quantum optical receiver and detector with improved detection sensitivity.

SUMMARY OF THE INVENTION

According to the invention, this problem is solved by the subject matter of the independent claims.

According to a first aspect of the invention, an optical detector for quantum communication is provided. The optical detector comprises a photonic lantern comprising a multi-mode input port configured to receive a spatial multi-mode input signal, and a plurality of single-mode output ports connected to the multi-mode input port by respective light channels, wherein the photonic lantern is configured to split the spatial multi-mode input signal by guiding the spatial multi-mode input signal in the individual light channels into a plurality of mutually orthogonal spatial single-mode output signals and output the plurality of single-mode output signals through the single-mode output ports; a coherent beam combiner configured to coherently combine the plurality of single-mode output signals to form a single-mode combined output signal; and a photodetector assembly comprising one or more single photon counters and arranged and configured to detect the combined output signal to provide a detection signal.

According to a second aspect of the invention, an optical receiver for quantum communication is provided. The optical receiver comprises the inventive optical detector and a telescope configured to guide the multi-mode input signal into a multi-mode waveguide coupled to the multi-mode input port of the optical detecto r.

According to a third aspect of the invention, a method for quantum communication is provided. The method comprises receiving a multi-mode input signal by a multi-mode input port of a photonic lantern; guiding the multi-mode input signal in a plurality of light channels to respective single-mode output ports of the photonic lantern, thereby splitting the multi-mode input signal to mutually orthogonal single-mode output signals; coherently combining the plurality of single-mode output signals to form a single-mode combined output signal, receiving the combined output signal by a photodetector assembly comprising one or more single photon counters to provide a detection signal.

A fundamental concept of the invention is to provide a multi-mode interface of the optical detector and couple the entire multi-mode input signal into the optical detector before combining the multiple modes into a single-mode combined output signal that is suitable for the photodetector. To achieve this, the invention proposes a photonic lantern, which is used to split the multi-mode input signal into separate single-mode signals that are subsequently coherently combined into the combined output signal. This single-mode combined output signal is suitable for the photoreceiver to achieve a strong electrical detection signal.

A particular advantage of the solution according to an aspect of the invention is that the optical detector has a multi-mode interface. In this way, it is easier to couple the multi-mode input signal into the optical detector and finally achieve a strong detection signal compared to a single-mode fiber interface that attempts to couple the multi-mode input signal directly into a single-mode waveguide. Having experienced atmospheric distortions, such a multi-mode input signal rapidly changes its mode pattern and wavefront due to dynamic atmospheric turbulences. Their dynamics are dependent on the velocity of the wind in the optical channel between the optical transmitter emitting the quantum communication signal and the optical receiver including the optical detector. In the case of receiving quantum communication signals from a satellite, wind velocities in the upper atmosphere, e.g. due to the Jetstream, are very high leading to a rapid mode pattern variation.

The photonic lantern is a component commonly known in the field of optics. The photonic lantern as understood with regard to the present invention is compatible with the common use of the term in the field of optics. It is configured to split a spatial multi-mode signal or beam into a plurality of mutually orthogonal spatial single-mode signals or beams propagating in light channels within the photonic lantern. One example implementation could be on the base of step-index fibers or waveguides providing higher order $LP_{XY}$-modes that would be separated by spatially separated light channels to a plurality of single-modes, i.e. $LP_{01}$-modes. In principal, other than LP-optical modes could be implemented, e.g. Gaussian modes, such as a $TEM_{xy}$-modes. Also other types of waveguide such gradual index waveguides can be used. The photonic lantern can also be implemented by a multi-mode waveguide having a gradual transition to a multi-core waveguide including single-mode cores.

As within this application, the optical detector and the optical receiver are intended to be used for quantum communication using a photon stream including QKD encoded pulses. A QKD encoded pulse is a pulse intended and suitable for quantum communication, typically containing on average less than one photon and carrying information in the form of a quantum state. Classically, such a quantum state may be polarization. In the most common BB84 scheme, polarization states of 0°, 90°, +45° and -45° are used. However, other quantum states such as e.g. the orbital angular momentum, the E91 scheme or decoy states may be applied to the QKD encoded pulses within this invention.

Advantageous embodiments and further developments emerge from the description with reference to the figures.

According to some further aspects of the optical detector according to the invention, the photonic lantern comprises a multi-mode waveguide portion comprising the multi-mode input port and supporting the spatial multi-mode input signal. The a multi-mode waveguide portion thus guides the multi-mode input signal right after coupling into the multi-mode input port. The photonic lantern further comprises a plurality of single-mode waveguide portions, each having one of the plurality of single-mode output ports and supporting the single-mode output signals. The photonic lantern further comprises an intermediate portion arranged between the multi-mode waveguide portion and the plurality of single-mode waveguide portions and configured to gradually split the multi-mode input signal into the plurality of single-mode output signals. The intermediate portion is thus a transition portion in where the multi-mode input signal gradually divides into the mutually orthogonal single-mode output signals. The intermediate portion might also be configured as a waveguide. The light channels are provided through all the three portions. The single-mode waveguide portions thus guide the signal modes split in the intermediate section as single-mode beams. The dimension of the waveguide's core thus depends on the selected wavelength, e.g. 1550 nm, and further parameters, such as e.g. the numerical aperture (NA) of the waveguide.

According to some further aspects of the optical detector according to the invention, the photonic lantern further comprises an adapter portion arranged between the intermediate portion and the single-mode waveguide portion and configured to arrange the light channels of the intermediate waveguide portion according to an arrangement of the single-mode waveguide portions. Such an adapter is necessary e.g. if the multi-mode portion and intermediate portion are formed as a three-dimensional fiber bundle, however, the single-mode output ports of the single-mode waveguide portion are arranged array-like in a plane. Implemented on a chip, an adapter could comprise a three-dimensional waveguide arrangement in order to provide e.g. a plane single-mode waveguide portion. Furthermore, the adapter portion provides a matching function for efficient optical coupling between different photonic integrated platforms. The adapter thus increases the flexibility of the design of the single-mode waveguide portions.

According to some further aspects of the optical detector according to the invention, the photonic lantern is configured to split the spatial multi-mode input signal of a wavelength of about 1550 nm into the plurality of mutually orthogonal spatial single-mode output signals. This wavelength is a preferred wavelength since it would be compatible with the widely used terrestrial photonics fiber network, e.g. in undersea cables etc..

According to some further aspects of the optical detector according to the invention, the coherent combiner comprises combiner optics configured to combine the plurality of single-mode output signals exiting the single-mode output ports to a single-mode combined output signal. Such a single-mode combined output signal is easier to apply to a photon counter and can provide a stronger signal. The coherent combiner further comprises a plurality of phase shifters each configured to shift a phase of a respective one of the plurality of single-mode output signals. The phase shifters enable the coherent combination of the single-mode output signals. Furthermore, a control circuit is provided and configured to control the phase shift of each of the phase shifters based on the detection signal provided by the one or more single photon counters. In this way, phase changes of the multi-mode input signal can be quickly adapted so that a stable single-mode combined output signal is achieved.

According to some further aspects of the optical detector according to the invention, the combiner optics are configured as waveguide optics comprising at least one waveguide combiner. Each of the single-mode output ports thus is connected to a respective single-mode waveguide. In this way, the detector is relatively robust against vibrations or mechanical shocks. Furthermore, it provides a small compact optical detector.

According to some further aspects of the optical detector according to the invention, the phase shifters are configured as optomechanical phase shifters. These phase shifters can be implemented to optical waveguides e.g. on-chip optical waveguides. They thus result in a compact and robust optical detector.

According to some further aspects of the optical detector according to the invention, the coherent combiner comprises: a wavefront phase shifter arranged upstream the multi-mode input port, and a wavefront control circuit connected to the one or more single photon counters and the wavefront phase shifter and configured to control the wavefront phase shifter based on the detection signal. The wavefront phase shifter can be implemented as a tunable phase plate or a deformable mirror or any other suitable device. In this way, the setup is facilitated since no individual phase shifters for each light channel are used to adapt the phase of the plurality of single-mode output signals for coherent combining.

According to some further aspects of the optical detector according to the invention, the optical detector further comprises a reference light channel configured to receive a reference quantum signal. The photodetector assembly comprises a reference input port configured to receive the reference quantum signal and combine the reference quantum signal with the combined output signal. In this way, a CV-QKD detector can be implemented without requiring a local oscillator and modulator that is typically used in homodyne CV-QKD detectors. This significantly facilitates the setup of the photodetector assembly.

According to some further aspects of the optical detector according to the invention, at least one of the one or more single photons counter is a superconductive nanowire photon counter (SNSPD). Such a photodetector provides higher sensitivity than for example typical avalanche photodiodes (APDs), in particular in the infrared spectral range, e.g. around a wavelength of 1550 nm.

According to some further aspects of the optical detector according to the invention, the optical detector further comprises a cryogenic chamber comprising the photon assembly and having a temperature of less than 100 K. The temperature of the cryogenic chamber may also be considerably less than 100 K, such as e.g. less than 15 K, 5 K, 4 K or 1 K. In particular, the temperature is below the temperature of liquid Helium, i.e. below about 4.15 K, in order to form a He cryostat. Such a cryogenic chamber allows the use of particular photodetectors, such as the superconductive nanowire photon counter (SNSPD), which provides higher sensitivity than for example typical avalanche photodiodes (APDs), in particular in the infrared spectral range, e.g. around a wavelength of 1550 nm.

According to some further aspects of the optical detector according to the invention, the detector assembly is provided on a photonic chip. Furthermore, the photonic lantern may also be provided on the same photonic chip. In consequence, all kind of possible combiner optics such as waveguide combiners is provided on the same photonic chip. This results in a small, compact and robust optical detector.

According to some further aspects of the optical detector according to the invention, the photonic chip is arranged in the cryogenic chamber. This represents a particularly compact solution for the optical detector, that could be placed in a small He cryostat. In this way, the optical detector also provides superior sensitivity for detecting a quantum communication signal after experiencing wavefront distortions through the atmosphere.

According to some further aspects of the optical receiver according to the invention, the receiver further comprises a pointing system configured to couple the multi-mode input signal into the multi-mode fiber based on the detection signal. A pointing system in combination with a multi-mode fiber is a suitable approach to receive the optical communication signal as a multi-mode input signal.

The above aspects can be combined with each other as desired, if useful. In particular, where appropriate, all features of the optical detector and the optical receiver are transferable to the method for quantum communication, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

BRIEF SUMMARY OF THE DRAWINGS

The present invention is explained in more detail below with reference to the embodiments shown in the schematic figures:

Fig. 1    a schematic illustration of an optical detector for quantum communication according to an embodiment of the invention;

Fig. 2    a schematic illustration of an optical receiver for quantum communication according to an embodiment of the invention;

Fig. 3    a schematic illustration of an optical receiver for quantum communication comprising an optical detector according to an embodiment of the invention;

Fig. 4    a schematic illustration of an optical receiver for quantum communication comprising an optical detector according to a further embodiment of the invention;

Fig. 5    a schematic illustration of a photoreceiver assembly of an optical detector according to a further embodiment of the invention; and

Fig. 6    a schematic illustration of a method for quantum communication according to an embodiment of the invention.

In the figures of the drawing, elements, features and components which are identical, functionally identical and of identical action are denoted in each case by the same reference designations unless stated otherwise.

DESCRIPTION OF EXEMPLARY EMBODIMENTS

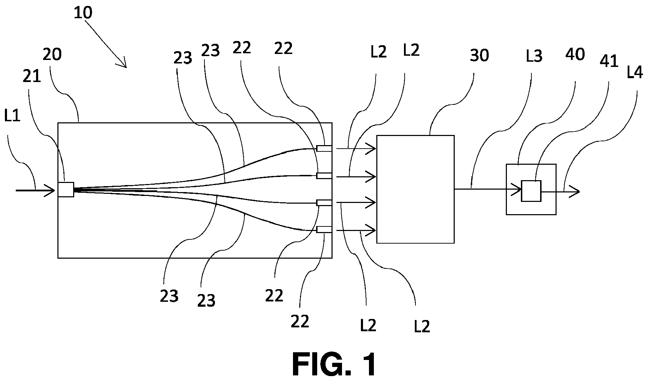

Fig. 1 shows a schematic illustration of an optical detector 10 for quantum communication according to an embodiment of the invention.

The optical detector 10 for quantum communication shown in Fig. 1 comprises a photonic lantern 20. The photonic lantern 20 comprises a multi-mode input port 21 configured to receive a spatial multi-mode input signal L1. The spatial multi-mode input signal L1 can be a quantum communication signal emitted from a quantum transmitter, e.g. located on a satellite. Distortions due to atmospheric turbulences or other causes (e.g. distorted optics) could lead to a distortion of the transmitted signal's wavefront, thus altering a spatial single-mode transmitted signal during propagation to the optical detector 10 to form the spatial multi-mode input signal 21.

As described above, the photonic lantern 20 understood with regard to the present invention is compatible with the common use of the term in the field of optics as will be explained in detail further below.

The photonic lantern 20 further comprises a plurality of single-mode output ports 22 connected to the multi-mode input port 21 by respective light channels 23. The photonic lantern 20 is configured to split the spatial multi-mode input signal L1 by guiding the spatial multi-mode input signal L1 in the individual light channels 23 into a plurality of mutually orthogonal spatial single-mode output signals L2. The plurality of single-mode output signals L2a-L2d is output through the respective single-mode output port 22. In Fig. 1, a number of four light channels 23 are indicated that split the multi-mode input signal L1 from the multi-mode input port 21 to the respective four single-mode output ports 22 of the photonic lantern 20. It is understood that the number of light channels 23 may vary according to the required number of single-mode output signals L2, which depends on the number of optical modes contained in the multi-mode input signal L1.

As within this embodiment, the photonic lantern 20 is configured to split the spatial multi-mode input signal L1 of a wavelength of about 1550 nm into the plurality of mutually orthogonal spatial single-mode output signals L2. The light channels 23 are thus configured to support only a single optical mode from the multi-mode input port 21 to the respective single-mode output port 22. Splitting the plurality of modes contained in the multi-mode input signal L1 into mutually orthogonal spatial single-modes L2 is thus achieved by spatially separated light channels 23. In some embodiments, this is achieved by a multicore fiber or a multi-core waveguide, wherein the multicore fiber or multi-core waveguide includes a plurality of single-mode fiber or waveguides configured to guide only a single optical mode. As explained above, the optical mode are determined by the photonic lantern and can be, in the case of a step-index structure, of $LP_{xy}$-type. However, the invention is not limited to these kind of modes. All types of optical modes forming a mutually orthogonal mode system (Gaussian, Laguerre, Bessel, ...) can be implemented using suitable waveguides.

The optical detector 10 further comprises a coherent beam combiner 30 configured to coherently combine the plurality of single-mode output signals L2 to form a single-mode combined output signal L3. Due to the coherent coupling, the respective amplitudes of the plurality of single-mode output signals L2 are thus added to form the combined single-mode output signal L2, which provides a strong signal strength.

The optical detector 10 further comprises a photodetector assembly 40 comprising one or more single photon counters 41. The photodetector assembly 40 is arranged and configured to detect the combined output signal L3 to provide a detection signal L4. The single photon counter 41 is thus able to count the received photons of a photon stream as typically used in quantum communication links and convert the signal into the detection signal L4. In this embodiment, the single photon counter 41 is configured as a superconductive nanowire photon counter (SNSPD), which is particularly sensitive in the infrared spectral range, in particular around 1550 nm, compared to other single photon counter technologies. In further embodiments, the single photon counter 41 is configured as an avalanche photodiode (APD) or any other suitable single photon counter 41. The detection signal L4 is thus an electrical signal providing the communicated information by the quantum communication link.

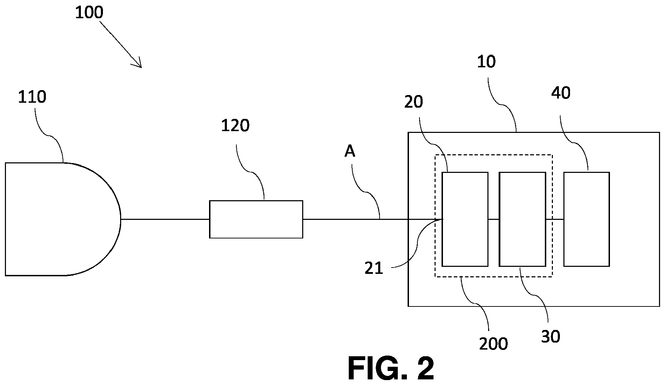

Fig. 2 shows a schematic illustration of an optical receiver 100 for quantum communication according to an embodiment of the invention.

The optical receiver 100 for quantum communication shown in Fig. 2 comprises an optical detector 10, which could be any of the optical detectors 10 described as within this invention. The optical detector 10 thus includes a photonic lantern 20, a coherent beam combiner 30 and a photodetector assembly 40, as e.g. described above. As described above, the photonic lantern 20 and the coherent beam combiner 30 form a mode combining element 200 converting the multi-mode input signal L1 into a coherent single-mode combined output signal L3. The optical receiver 100 further comprises a telescope 110 configured to guide the multi-mode input signal L1 into a multi-mode waveguide 120. The multi-mode waveguide 120 is coupled to the multi-mode input port 21 of the optical detector 20. The light path or optical axis A is also depicted in Fig. 2.

In further embodiments and not shown in Fig.

2, the optical receiver 100 comprises a pointing system configured to couple the incident multi-mode input signal L1 into the multi-mode fiber 120 based on the detection signal L4 provided by the photodetector assembly 40.

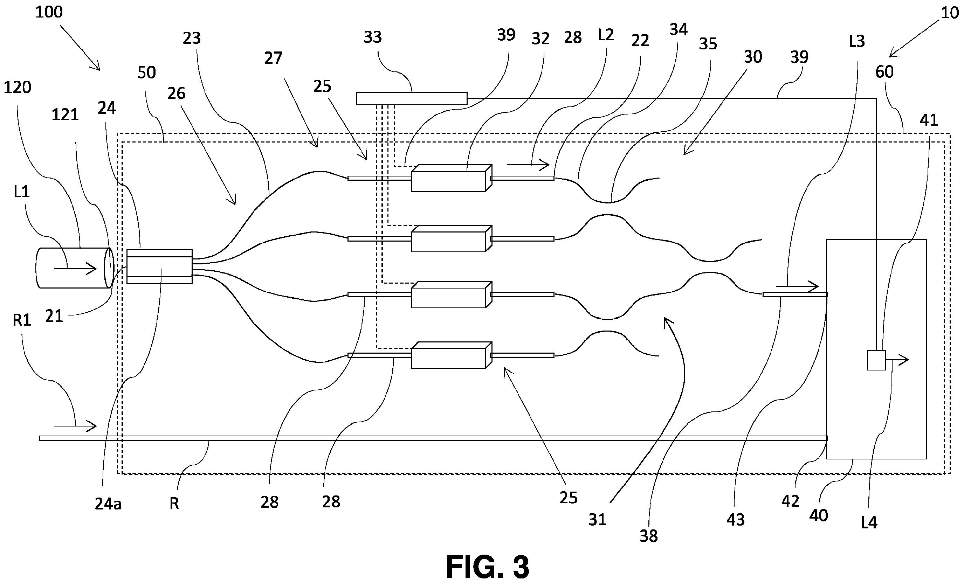

Fig. 3 shows a schematic illustration of an optical receiver 100 for quantum communication comprising an optical detector 10 according to an embodiment of the invention.

The optical receiver 100 shown in Fig. 3 is based on and compatible with the optical receiver 100 shown in Fig. 2 and the optical detector 10 integrated with the optical receiver 100 of Fig. 3 is compatible with the optical receiver 10 shown in Fig. 1.

The optical receiver 100 comprises a multi-mode waveguide 120 coupled to the multi-mode input port 21 of the photonic lantern 20 of the optical detector 10. The multi-mode input signal L1 coupled to the multi-mode fiber 120 thus propagates from the multi-mode fiber 120 to the multi-mode input port 21 to couple into the photonic lantern 20. This coupling could be achieved using coupling optics, in particular employing aspheric lenses. The coupling could also be achieved by butt-coupling of an and-face 121 of the multi-mode fiber 120 with the multi-mode input port 21. In further embodiments, coupling optics are applied to efficiently couple the multi-mode input signal L1 from the multi-mode fiber 120 to the multi-mode input port 21.

The photonic lantern 20 shown in Fig. 3 comprises a multi-mode waveguide portion 24 comprising the multi-mode input port 21 at its outer face. The multi-mode waveguide portion 24 supports the spatial multi-mode input signal L1. The multi-mode waveguide portion 24 can be implemented e.g. by a step-index multi-mode fiber or waveguide, having e.g. a core 24a of 50 $\mu$m or 100 $\mu$m diameter and an NA of about 0.2. Other types of fibers or waveguides are possible, such as graded index fibers or waveguides.

The photonic lantern 20 further comprises a plurality of single-mode waveguide portions 25, each having one of the plurality of single-mode output ports 22 and supporting the single-mode output signals L2. Depending on the applied optical modes, the single-mode waveguide portions 25 include single-mode waveguides 28 that have a core of about 10 $\mu$m and an NA of about 0.1, e.g. for a wavelength of 1550 nm. In the present embodiment, the plurality of single-mode waveguide portions 25 is implemented by separate single-mode waveguides 28 arranged in a plane configuration. In further embodiments, the plurality of single-mode waveguides 28 are realized by a multi-core fiber. In the present embodiment, four single-mode waveguides 28 are shown. In further embodiments, less than four or five and more single-mode waveguides 28 are applied. In particular, in some embodiments, more than 10, 20, 50 or 100 single-mode waveguides 28 are applied. In particular, in further embodiments, the number of single-mode waveguides 28 is about equal to the number of modes supported by the multi-mode waveguide portion 24. This can be estimated using standard formulas in the art, just as:

$$N \approx \left( \frac{\pi d NA}{\lambda} \right)^2$$

, wherein N is the number of single-mode waveguides 28, d the diameter of the core of the multi-mode waveguide portion, NA the numerical aperture of the multi-mode waveguide portion 24 and $\lambda$ the wavelength of the multi-mode input signal L1.

The photonic lantern 20 further comprises an intermediate portion 26 arranged between the multi-mode waveguide portion 24 and the plurality of single-mode waveguide portions 25 and configured to gradually split the multi-mode input signal L1 into the plurality of single-mode output signals L2. Although separate light channels 23 are shown in Fig. 3, in further embodiments, the intermediate section 26 is implemented as a tapered fiber or waveguide, gradually increasing its outer diameter by maintaining a plurality of a single-mode core sections for an efficient mode transition.

The photonic lantern 20 further comprises an adapter portion 27 arranged between the intermediate portion 26 and the single-mode waveguide portion 25 and configured to arrange light channels 23 of the intermediate portion 26 according to an arrangement of the single-mode waveguide portions 25. In the present embodiment, the adapter portion 27 rearranges the light channels 23 of the intermediate portion 26 from an original circular cross-section to a plane arrangement of the plurality of the single-mode waveguide portions 25. The three-dimensional nature of the photonic lantern 20 is only indicated in Fig. 3 due to the plane nature of the figure. In the embodiment, the adapter portion 27 provides a matching function for efficient optical coupling between different photonic integrated platforms. The adapter portion 27 is, however, in general optional. In further embodiments, a fiber bundle is used as the single-mode waveguide portions 25, so that the adapter portion 26 is not needed.

Similar to the previous embodiments, the photonic lantern 20 of the present embodiment is configured to split the spatial multi-mode input signal L1 of a wavelength of about 1550 nm into the plurality of mutually orthogonal spatial single-mode output signals L2 to be compatible with the terrestrial photonic network. In further embodiments, other wavelengths are used, such as e.g. 850 nm.

In the embodiment of the optical receiver 100 shown in Fig. 2, the coherent beam combiner 30 of the optical detector 10 comprises combiner optics 31 configured to combine the plurality of single-mode output signals L2 exiting the single-mode output ports 22 to a single-mode combined output signal L3. In the present embodiment, the combiner optics 31 are configured as waveguide optics comprising at least one waveguide combiner 34, wherein each of the single-mode output ports 22 is connected to a respective single-mode combiner waveguide 35 of the combiner optics 31. In further embodiments, the combiner optics 31 are implemented as fiber couplers, or by a free-space setup using mirrors and beam combiners. The combined output signal L3 is then fed to an input signal port 43 of the photodetector assembly 40 by a further single-mode waveguide 38.

The coherent beam combiner 30 further comprises a plurality of phase shifters 32 each configured to shift a phase of a respective one of the plurality of single-mode output signals L2. In the present embodiment, the phase shifters 32 are configured as optomechanical phase shifters. Such phase shifters can be directly applied to the single-mode waveguides 28 as shown in Fig. 3. The phase sifters 32 thus shift the phase of the single-mode output signals L2 before they exit from the single-mode waveguide portion 25 by the single-mode output ports 22. In further embodiments, the phase is shifted after the single-mode output signals have propagated through the single-mode output ports 22 of the photonic lantern 20.

The optical detector 10 shown in Fig. 3 further comprises a control circuit 33 configured to control the phase shift of each of the phase shifters 32 applied to the single-mode output signal L2 based on the detection signal L4 provided by the single photon counter 41 of the single photon assembly 40. The control circuit 33 is thus connected to each of the phase shifters 32 and to the single photon counter 41 of the photodetector assembly 40 by electrical lines 39.

The optical receiver 10 shown in Fig. 3 further comprises a reference light channel R configured to receive a reference signal R1, wherein the photodetector assembly 40 comprises a reference input port 42 configured to receive the reference signal R1 and combine the reference signal R1 with the combined output signal L3. As will be described later, this facilitates the use of a balanced detector as typically used for CV-QKD detection. However, in further embodiments, a local oscillator and a modulator is used in place of the reference channel R to form a homodyne CV-QKD detector.

In the present embodiment, the single photon counter 41 is implemented as a superconductive nanowire photon counter (SNSPD). Since this type of detector comprising superconductors requires an operation at cryogenic temperatures, the optical detector 10 also comprises a cryogenic chamber 50 comprising the detector assembly 40 including the single photon counter 41. The cryogenic chamber 50 has a temperature of less than about 4 K. In this way, the temperature is below the temperature of liquid Helium, i.e. below about 4.15 K, so that a He cryostat is formed. In further embodiments, the temperature of the cryogenic chamber 50 is higher and may be less than 150 K, 100 K or 10 K, 5K or even lower as for example less than 2 K, or less than 1 K. In the present embodiment, the photonic lantern 20, the combiner optics 31 and the detector assembly 40 are provided in the cryogenic chamber 50. In further embodiments, only the detector assembly 41, or only the detector assembly 40 and the combiner optics 31, are provided in the cryogenic chamber 50.

In this embodiment, the optical detector 10 also comprises a photonic chip 60. The photonic chip 60 may be made of any commonly used technique for photonic integrated circuits, such as indium phosphide or silicone waveguides. The detector assembly 40, the combiner optics 31 and the photonic lantern 20 are provided on the photonic chip 60, i.e. the same photonic chip 60. In further embodiments, only the detector assembly 40, or only the detector assembly 40 and the combiner optics 31, are provided on the photonic chip 60.

In this embodiment, the photonic chip 60 comprising the photonic lantern 20, the combiner optics 31 and the detector assembly 40 is arranged in the cryogenic chamber 50. In this way, a very compact and cryogenic cooled and therefore sensitive optical detector 10 is realized.

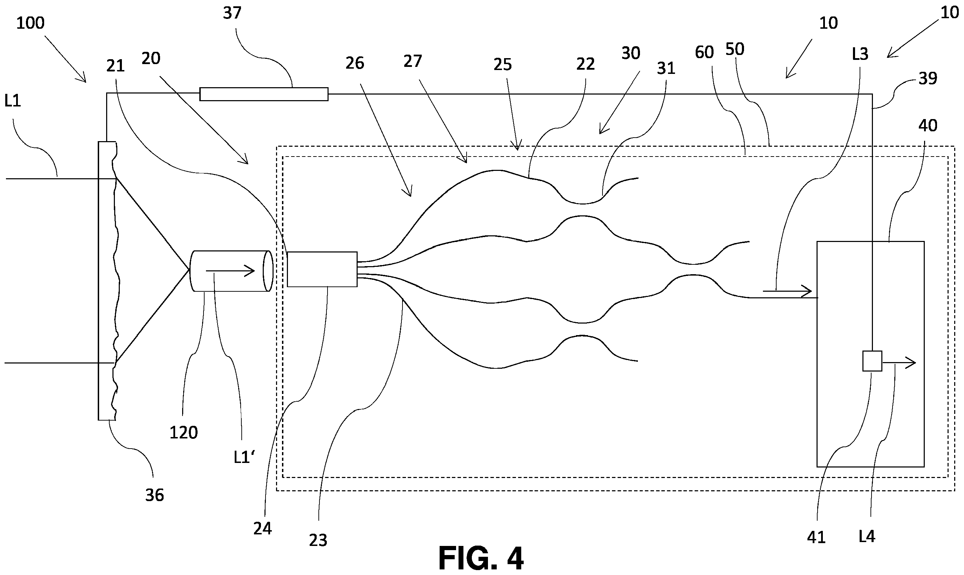

Fig. 4 shows a schematic illustration of an optical receiver 100 for quantum communication comprising an optical detector 10 according to a further embodiment of the invention.

The optical receiver 10 shown in Fig. 4 is based on and compatible with the optical receiver 10 of Fig. 2 and the optical detector of Fig. 1.

The main difference between the previously described optical receiver 10 and shown in Fig. 3 is that the coherent beam combiner 30 is realized in a different way. In the embodiment shown in Fig. 4, the coherent beam combiner 30 comprises a wavefront phase shifter 36 arranged upstream the multi-mode input port 21 of the photonic lantern 20. The wavefront phase shifter 36 in this embodiment is a tunable phase plate. Such a waveplate is configured to spatially modulate the wavefront of an incident beam by propagating through the waveplate. In further embodiments, the wavefront phase shifter is a deformable mirror, which is configured to spatially modulate the wavefront of an incident beam by reflecting the beam.

By propagating through the wavefront phase shifter 36, the multi-mode input signal L1 is thus altered to a spatially modulated modified multi-mode input signal L1'. This modulation effectively takes into account the different lengths of the optical paths of the split single-mode input signals through the photonic lantern 20 and the combiner optics 31. The length of the optical beam path may change due to temperature variations or mechanical stress or other factors.

A corresponding wavefront control circuit 37 is used to control the wavefront modulation. In this embodiment, the wavefront control circuit 37 is connected to the single photon counter 41 of the photodetector assembly 40 and the wavefront phase shifter 36 by electrical lines 39, such as cables. The wavefront control circuit 37 is configured to control the wavefront phase shifter 36 based on the detection signal L4 provided by the one or more single photon counters 41. The control algorithm is based on a maximum signal optimization algorithm, which could e.g. implement deep learning strategies. Therefore, even without any individual phase shifters 32 as described in the previous embodiment shown in Fig.3, the plurality of single-mode output signals L2 automatically coherently combine to a single-mode combined output signal L3 due to the modified multi-mode input signal L1', which takes account of the different path lengths each single-mode output signal is experiencing in the photonic lantern 20 and the combiner optics 30.

In this example as well, a multi-mode waveguide 120 is used to couple to the multi-mode input port 21 of the optical detector 10 in a similar way as shown in Fig. 3.

Similar to the embodiment described in relation to Fig. 3, also in this embodiment, a reference light channel R could be implemented to receive a reference signal R1.

Similar to the embodiment described in relation to Fig. 3, also in the embodiment shown in Fig. 4, the detector assembly 40, the combiner optics 31 and the photonic lantern 20 are provided on a photonic chip 60, i.e. the same photonic chip 60. In further embodiments, only the detector assembly 40, or only the detector assembly 40 and the combiner optics 31, are provided on the photonic chip 60.

In this embodiment as well, the photonic chip 60 comprising the photonic lantern 20, the combiner optics 30 and the detector assembly 40 is arranged in the cryogenic chamber 50, which in this embodiment is configured as a He cryostat. In this way, a very compact and cryogenic cooled and therefore sensitive optical detector 10 is realized.

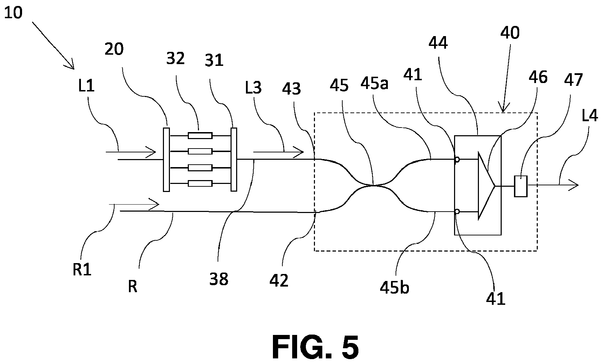

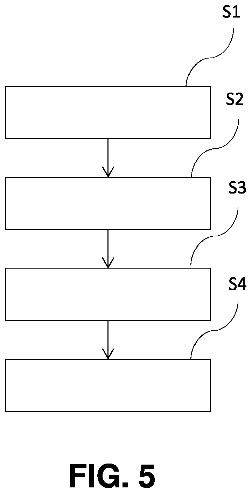

Fig. 5 shows a schematic illustration of a photoreceiver assembly 40 of an optical detector 10 according to a further embodiment of the invention.

The photodetector assembly 40 shown in Fig. 5 is configured as a CV-QKD detector, which is compatible with the previous embodiments of the optical receiver 100 and optical detectors 10. As described above, in the optical receiver 10 shown in Fig. 5, a multi-mode input signal L1 propagates through a photonic lantern 20 and combiner optics 31, where it is split and coherently combined by using phase shifters 32 to form the combined output signal L3. The combined output signal L3 is then fed to an input signal port 43 of the photodetector assembly 40 by a further single-mode waveguide 38.

The photodetector assembly 40 comprises a balanced detector 44 including two single photon counters 41. In the present embodiment, the single photon counters 41 are implemented as superconductive nanowire photon counters (SNSPD). As in the previous embodiments of the optical receiver 10, a reference light channel R is configured to receive the reference signal R, wherein the photodetector assembly comprises a reference input port 42 configured to receive the reference signal R1 and combine the reference signal R1 with the combined output signal L3 using the waveguide coupler 45. Two single photon counters 41 are arranged downstream each output port 45a, 45b of the waveguide coupler 45 and configured to detect the combined output signal L3 mixed with the reference signal R1. The single photon counters 41 of the balanced detector 44 is configured to measure a quadrature at a time and feed an analog-digital converter 47. The electrical output of the photon counters 41 is amplified by an operational amplifier or transimpedance amplifier 46 to provide a detection signal L4. Compared to a typical homodyne CV-QKD detector, due to the reference light channel R, no local oscillator and modulator is required anymore upstream the waveguide coupler 45. However, in further embodiments, a local oscillator and a modulator is used in place of the reference channel R to form a homodyne CV-QKD detector.

Fig. 6 shows a schematic illustration of a method for quantum communication according to an embodiment of the invention.

The method for quantum communication depicted in Fig. 6 comprises the steps of receiving S1 a multi-mode input signal L1 by a multi-mode input port 21 of a photonic lantern 20. Furthermore, the step of guiding S2 the multi-mode input signal L1 in a plurality of light channels 23 to respective single-mode output ports 22 of the photonic lantern 20 is provided. Thereby, the multi-mode input signal L1 is split to mutually orthogonal single-mode output signals L2. The method further includes the step of coherently combining S3 the plurality of single-mode output signals L2 to form a single-mode combined output signal L3. The method further includes the step of receiving S4 the combined output signal L3 by a photodetector assembly 40 comprising a single photon counter 41 to provide a detection signal L4.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

LIST OF REFERENCE SIGNS

| 10 | optical detector |
|---|---|
| 20 | photonic lantern |
| 21 | multi-mode input port |
| 22 | single-mode output ports |
| 23 | light channel |
| 24 | multi-mode waveguide portion |
| 24a | core of the multi-mode waveguide portion |
| 25 | single-mode waveguide portions |
| 26 | intermediate portion |
| 27 | adapter portion |
| 28 | single-mode waveguide |
| 30 | coherent beam combiner |
| 31 | combiner optics |
| 32 | phase shifter |
| 33 | Control circuit |
| 34 | waveguide combiner |
| 35 | single-mode waveguide of the combiner optics |
| 36 | wavefront phase shifter |
| 37 | wavefront control circuit |
| 38 | further single-mode waveguide |
| 39 | electrical lines |
| 40 | photodetector assembly |
| 41 | single photon counter |
| 42 | reference input port |
| 43 | input signal port |
| 44 | balanced detector |
| 45 | waveguide coupler |
| 45a, 45b | output ports of the waveguide coupler |
| 46 | transimpedance amplifier |
| 47 | analog-to-digital converter |
| 50 | cryogenic chamber |
| 60 | photonic chip |
| 100 | optical receiver |
| 110 | telescope |
| 120 | multi-mode fiber |
| 121 | end-face of the multi-mode fiber |
| 200 | mode combining element |
| A | optical axis |
| L1 | multi-mode input signal |
| L1' | modified multi-mode input signal |
| L2 | single-mode output signal |
| L3 | combined output signal |
| L4 | detection signal |
| R | reference light channel |
| R1 | reference signal |
| S1 - S4 | method steps |

**Claims**

1. Optical detector (10) for quantum communication, comprising:

   a photonic lantern (20) comprising

   a multi-mode input port (21) configured to receive a spatial multi-mode input signal (L1), and
   a plurality of single-mode output ports (22) connected to the multi-mode input port (21) by respective light channels (23), wherein the photonic lantern (20) is configured to split the spatial multi-mode input signal (L1) by guiding the spatial multi-mode input signal (L1) in the individual light channels (23) into a plurality of mutually orthogonal spatial single-mode output signals (L2) and output the plurality of single-mode output signals (L2) through the single-mode output ports (22);

   a coherent beam combiner (30) configured to coherently combine the plurality of single-mode output signals (L2) to form a single-mode combined output signal (L3); and
   a photodetector assembly (40) comprising one or more single photon counters (41) and arranged and configured to detect the combined output signal (L3) to provide a detection signal (L4).

2. Optical detector (10) according to claim 1, wherein the photonic lantern (20) comprises:

   a multi-mode waveguide portion (24) comprising the multi-mode input port (21) and supporting the spatial multi-mode input signal (L1),
   a plurality of single-mode waveguide portions (25), each having one of the plurality of single-mode output ports (22) and supporting the single-mode output signals (L2), and

an intermediate portion (26) arranged between the multi-mode waveguide portion (24) and the plurality of single-mode waveguide portions (25) and configured to gradually split the multi-mode input signal (L1) into the plurality of single-mode output signals (L2).

3. Optical detector (10) according to claim 2, wherein the photonic lantern (20) further comprises an adapter portion (27) arranged between the intermediate portion (26) and the single-mode waveguide portion (25) and configured to arrange the light channels of the intermediate portion (26) according to an arrangement of the single-mode waveguide portions (25).

4. Optical detector (10) according to any of the preceding claims, wherein the photonic lantern (20) is configured to split the spatial multi-mode input signal (L1) of a wavelength of about 1550 nm into the plurality of mutually orthogonal spatial single-mode output signals (L2).

5. Optical detector (10) according to any of the preceding claims, wherein the coherent combiner (30) comprises:

combiner optics (31) configured to combine the plurality of single-mode output signals (L2) exiting the single-mode output ports to a combined output signal (L3), a plurality of phase shifters (32) each configured to shift a phase of a respective one of the plurality of single-mode output signals (L2), and
a control circuit (33) configured to control the phase shift of each of the phase shifters (32) based on the detection signal (L4) provided by the one or more single photon counters (41).

6. Optical detector (10) according to claim 5, wherein the combiner optics (31) are configured as waveguide optics comprising at least one waveguide combiner (34), wherein each of the single-mode output ports (22) is connected to a respective single-mode waveguide (35).

7. Optical detector (10) according to claim 5 or 6, wherein the phase shifters (32) are configured as optomechanical phase shifters.

8. Optical detector (10) according to any of the claims 1 to 4, wherein the coherent combiner comprises:

a wavefront phase shifter (36) arranged upstream the multi-mode input port, and
a wavefront control circuit (37) connected to the one or more single photon counters (41) and the wavefront phase shifter (36) and configured to control the wavefront phase shifter (36) based on the detection signal (L4).

9. Optical detector (10) according to any of the preceding claims, further comprising a reference light channel (R) configured to receive a reference signal (R1), wherein the photodetector assembly (40) comprises a reference input port (42) configured to receive the reference signal (R1) and combine the reference signal (R1) with the combined output signal (L3).

10. Optical detector (10) according to any of the preceding claims, wherein at least one of the one or more single photon counters (41) is a superconductive nanowire photon counter (SNSPD).

11. Optical detector (10) according to any of the preceding claims, further comprising a cryogenic chamber (50) comprising the photon assembly (40) and having a temperature of less than 100 K, in particular less than 15 K, 5 K, 4K, or 1 K.

12. Optical detector (10) according to any of the preceding claims, wherein the detector assembly (40) is provided on a photonic chip (60), and wherein the photonic lantern (20) in particular is provided on the same photonic chip (60).

13. Optical detector according to claims 11 and 12, wherein the photonic chip (60) is arranged in the cryogenic chamber (50).

14. Optical receiver (100) for quantum communication, comprising:

the optical detector (10) according to any of the preceding claims,
a telescope (110) configured to guide the multi-mode input signal (L1) into a multi-mode waveguide (120) coupled to the multi-mode input port (21) of the optical detector (10).

15. Optical receiver (100) according claim 14, further comprising a pointing system configured to couple the multi-mode input signal (L1) into the multi-mode fiber (120) based on the detection signal (L4).

16. Method for quantum communication, comprising:

- receiving (S1) a multi-mode input signal (L1) by a multi-mode input port (21) of a photonic lantern (20);
- guiding (S2) the multi-mode input signal (L1) in a plurality of light channels (23) to respective single-mode output ports (22) of the photonic lantern (20), thereby splitting the multi-mode input signal (L1) to mutually orthogonal single-mode output signals (L2);

- coherently (S3) combining the plurality of single-mode output signals (L2) to form a single-mode combined output signal (L3), and
- receiving (S4) the combined output signal (L3) by a photodetector assembly (40) comprising one or more single photon counters (41) to provide a detection signal (L4).

FIG. 1

FIG. 2

FIG. 3

**FIG. 4**

EP 4 440 008 A1

FIG. 5

EP 4 440 008 A1

**FIG. 5**

Europäisches
Patentamt

European
Patent Office

Office européen
des brevets

# EUROPEAN SEARCH REPORT

**Application Number**

EP 23 16 5737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BO ZHANG ET AL: "All-fiber photonic lantern multimode optical receiver with coherent adaptive optics beam combining", ARXIV.ORG, CORNELL UNIVERSITY LIBRARY, 201 OLIN LIBRARY CORNELL UNIVERSITY ITHACA, NY 14853, 20 May 2021 (2021-05-20), XP081966630, * figures 1(b), 2 * * Sections: I. INTRODUCTION, II. COHERENT BEAM COMBINING * | 1-16 | INV. H04B10/70 H04J14/04 |
| X | VINCENT BILLAULT ET AL: "Free space optical communication receiver based on a spatial demultiplexer and a photonic integrated coherent combining circuit", ARXIV.ORG, CORNELL UNIVERSITY LIBRARY, 201 OLIN LIBRARY CORNELL UNIVERSITY ITHACA, NY 14853, 7 June 2021 (2021-06-07), XP091089734, DOI: 10.1364/OE.433087 * figures 1B, 1C * * Section: 2. Experimental setup * | 1-16 | |
| X | CN 110 098 868 A (SHANGHAI INST OPTICS & FINE MECH CAS) 6 August 2019 (2019-08-06) * figure 1 * * paragraphs [0036] – [0038] * | 1-16 | TECHNICAL FIELDS SEARCHED (IPC) H04B |
| A | US 2016/233964 A1 (FROHLICH BERND MATTHIAS [GB] ET AL) 11 August 2016 (2016-08-11) * figures 4A, 4B * * paragraphs [0112], [0151], [0209] * | 1-16 | |

-/--

The present search report has been drawn up for all claims

| Place of search | Date of completion of the search | Examiner |
|---|---|---|
| Munich | 18 September 2023 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Application Number

EP 23 16 5737

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALARC\'ON A ET AL: "Few-mode-fiber technology fine-tunes losses of quantum communication systems", ARXIV.ORG, CORNELL UNIVERSITY LIBRARY, 201 OLIN LIBRARY CORNELL UNIVERSITY ITHACA, NY 14853, 5 October 2021 (2021-10-05), XP091066301, DOI: 10.1103/PHYSREVAPPLIED.16.034018 * Section: II. EXPERIMENT; figure 1c * | 1-16 | |
| A | VYHNALEK BRIAN E ET AL: "Few-mode fiber coupled superconducting nanowire single-photon detectors for photon efficient optical communications", SPIE PROCEEDINGS; [PROCEEDINGS OF SPIE ISSN 0277-786X], SPIE, US, vol. 10910, 22 February 2019 (2019-02-22), pages 109100D-109100D, XP060118814, DOI: 10.1117/12.2510958 ISBN: 978-1-5106-3673-6 * figure 12 * * Section 3. FEW-MODE FIBER SPATIAL MODE EFFICIENCY * | 10-13 | TECHNICAL FIELDS SEARCHED (IPC) |

The present search report has been drawn up for all claims

| Place of search | Date of completion of the search | Examiner |
|---|---|---|
| Munich | 18 September 2023 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 16 5737**

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| CN 110098868 | A | 06-08-2019 | NONE | | |
| US 2016233964 | A1 | 11-08-2016 | GB | 2534918 A | 10-08-2016 |
| | | | JP | 6324942 B2 | 16-05-2018 |
| | | | JP | 2016144206 A | 08-08-2016 |
| | | | US | 2016233964 A1 | 11-08-2016 |

EPO FORM P0459

For more details about this annex : see Official Journal of the European Patent Office, No. 12/82